# EUROPÄISCHE PATENTSCHRIFT

(11) **EP 2 044 304 B1**
(45) Veröffentlichungstag und Bekanntmachung des Hinweises auf die Patenterteilung: **07.08.2013**
(21) Anmeldenummer: 07725963.8
(22) Anmeldetag: 12.06.2007
(51) Int. Cl.: F02B 29/04

(54) **WÄRMETAUSCHER MIT KUPPLUNGSANSCHLUSS, BEISPIELSWEISE LADELUFTKÜHLER, UND KUPPLUNGSANSCHLUSS FÜR WÄRMETAUSCHER**
HEAT EXCHANGER WITH COUPLING CONNECTION, FOR EXAMPLE CHARGE AIR COOLER, AND COUPLING CONNECTION FOR HEAT EXCHANGER
ÉCHANGEUR DE CHALEUR AVEC RACCORD D'ACCOUPLEMENT, PAR EXEMPLE REFROIDISSEUR D'AIR DE CHARGE, ET RACCORD D'ACCOUPLEMENT POUR ÉCHANGEUR DE CHALEUR

(30) Priorität: 12.07.2006 DE 102006032205
(43) Veröffentlichungstag der Anmeldung: 08.04.2009
(73) Patentinhaber: Modine Manufacturing Company, Racine, Wisconsin 53403-2552 (US)
(72) Erfinder: KALBACHER, Klaus, 72414 Rangendingen (DE)
(74) Vertreter: Wolter, Klaus-Dietrich
(86) Internationale Anmeldenummer: PCT/EP2007/005150
(87) Internationale Veröffentlichungsnummer: WO 2008/006431

(56) Entgegenhaltungen:
- EP-A- 1 279 805
- EP-A2- 1 111 217
- DE-C1- 3 722 248
- GB-A- 2 375 388

## Beschreibung

Wärmetauscher mit Kupplungsanschluss, beispielsweise Ladeluftkühler, und Kupplungsanschluss für Wärmetauscher

Die Erfindung betrifft einen Wärmetauscher mit einem Kupplungsanschluss, beispielsweise Ladeluftkühler, bei dem die Ladeluft mittels Kühlluft gekühlt wird und der einen integrierten Vorkühler aufweist, in dem die Ladeluft mittels einer Kühlflüssigkeit gekühlt wird, sowie mit weiteren Merkmalen aus dem Oberbegriff des Anspruchs 1. Ferner betrifft die Erfindung einen Kupplungsanschluss für Wärmetauscher.

Der beschriebene Ladeluftkühler geht aus der JP 59 -145325 A hervor. Dieser Stand der Technik ist später auch in anderen Dokumenten beschrieben und teilweise weiterentwickelt worden, beispielsweise in der DE 3 722 248C1 oder in der WO 02/090739A1 oder in der DE 101 36 861A1 oder in GB 2 375 388A, um nur diese vier Dokumente zu nennen.

Die bekannten Vorschläge sehen vor, den Vorkühler in einem Sammelkasten des Ladeluftkühlers zu integrieren, was eine geeignete Maßnahme darstellt, die sich in der Praxis bewährt hat. Diese Bauweise macht es jedoch in den meisten Fällen erforderlich, denjenigen Sammelkasten, in dem der Vorkühler integriert ist, mit verhältnismäßig großen Abmessungen auszubilden, um eine spürbare Vorkühlung realisieren zu können. Insbesondere für PKW-Anwendungen ist eine solche Art der Integration des Vorkühlers deshalb oft nicht die beste Wahl.

Die Aufgabe der Erfindung besteht darin, eine für manche Einsatzfälle verbesserte Integration des Vorkühlers im Wärmetauscher, wie z. B. in einem Ladeluftkühler, vorzuschlagen, die vermutlich weniger Bauraum erfordert, bzw. die den zum Wärmetausch nutzbaren Raum relativ vergrößert ohne damit jedoch den Gesamtbauraum, verglichen mit einem Ladeluftkühler ohne integriertem Vorkühler, wesentlich vergrößern zu müssen. Die Aufgabe der Erfindung umfasst auch einen Kupplungsanschluss für Wärmetauscher, der eine kompakte Bauweise des Wärmetauschers unterstützt.

Diese Aufgabe wird mit einem Wärmetauscher, beispielsweise mit einem Ladeluftkühler gemäß dem Oberbegriff des Anspruchs 1 erfindungsgemäß durch dessen Kennzeichen gelöst. Weil der Vorkühler und/oder Nachkühler in einem Abschnitt des Kühlnetzes integriert ist, wird es möglich, die Sammelkästen des Wärmetauschers relativ deutlich kleiner zu gestalten. Es kann selbstverständlich auch ein Nachkühler gemäß der vorgeschlagenen Art zusätzlich zum Vorkühler oder alleine vorgesehen werden. Bei einem Vorkühler strömt die Ladeluft zunächst in denselben ein, bevor sie in den übrigen Ladeluftkühler strömen kann. Bei einem integrierten Nachkühler strömt die Ladeluft zunächst in das mit Kühlluft beaufschlagte Kühlnetz des Ladeluftkühlers und danach in den mit Kühlflüssigkeit beaufschlagten Nachkühler.

Der Erfinder ist von der Erkenntnis ausgegangen, dass Sammelkästen oder - räume zwar funktionsbedingte, notwendige Elemente eines Wärmetauschers sind, die jedoch kaum dem Wärmetausch selbst dienen können, weshalb vermutlich im Stand der Technik dort auch der Vorkühler untergebracht wird. Er sieht demgegenüber Sammelkästen vor, die so klein, insbesondere so flach wie möglich ausgebildet sind, und er verlegt den Vorkühler und / oder Nachkühler aus dem Sammelkasten in das Kühlnetz des Ladeluftkühlers hinein.

Er bevorzugt es, dass der Vorkühler / Nachkühler flache Kühlflüssigkeitsrohre aufweist, die sich in den Abständen zwischen den Flachrohren befinden.

Er sieht Vorteile darin, dass sich der Vorkühler/Nachkühler vorzugsweise über die gesamte Tiefe des Kühlnetzes aber nur über einen geringen Teil der Höhe bzw. Länge des Kühlnetzes bzw. der Flachrohre erstreckt.

Er bevorzugt es weiterhin, dass die Kühlflüssigkeitsrohre quer zu den Flachrohren angeordnet sind.

Er findet es richtig, dass der Teil bzw. der Abschnitt etwa 5 - 40 % des Kühlnetzes belegt.

Er ist an einer kompakten Bauweise seines Wärmetauschers (Ladeluftkühlers) und an geringen Fertigungskosten interessiert und sieht deshalb vor, dass der Vorkühler/Nachkühler nur einen einzigen Kupplungsanschluss aufweist, in dem der Einlass und der Auslass integriert sind, um beispielsweise die Kühlflüssigkeit in den Vorkühler/Nachkühler ein - und auch ausleiten zu können.

Der Erfinder ist der nachvollziehbaren Ansicht, dass der Kupplungsanschluss für eine ganze Reihe anderer Anwendungen, insbesondere für Wärmetauscher - Anwendungen, geeignet ist, selbstverständlich auch für solche Wärmetauscher, die keine Vorkühler/Nachkühler aufweisen. Er begehrt deshalb separaten Schutz dafür. Der Kupplungsanschluss besteht aus wenigstens zwei rohrförmigen Teilen, die koaxial ineinandersteckbar, arretierbar und abdichtbar sind. Der Kupplungsanschluss ist erfindungsgemäß dadurch gekennzeichnet, dass sich in einem der Teile eine Trennwand erstreckt, und dass in dem einen oder in dem anderen Teil wenigstens ein Einlassanschluss und/oder wenigstens ein Auslassanschluss vorgesehen sind. Eines der rohrförmigen Teile ist an wenigstens zwei relativ dicht beieinander liegenden Öffnungen in einer Wand eines Sammelkastens befestigt, wobei der Sammelkasten wenigstens eine Unterteilwand aufweist, die den Sammelkasten in einen Einlassteil und in einen Auslassteil aufteilt. Die Trennwand und die Unterteilwand liegen etwa in einer Ebene. Es kann auch vorgesehen sein, dass die Unterteilwand gleichzeitig als Trennwand dient. In solchen Fällen würde die im Sammelkasten angeordnete Unterteilwand aus einer einzigen Öffnung in der Wand des Sammelkastens hervorragen, die dann diese Öffnung in zwei Öffnungen aufteilt und die sich in ein rohrförmiges Teil hinein erstreckt. Deshalb ist der Anspruch, der sich auf den Kupplungsanschluss bezieht, so zu verstehen, dass die Trennwand entweder in einem rohrförmigen Teil befestigt bzw. Teil desselben ist oder sich lediglich dahinein erstreckt. Die eine erwähnte Öffnung oder ein Öffnungsteil ist dem Einlassteil zugeordnet und die andere Öffnung oder ein anderes Öffnungsteil kommuniziert mit dem Auslassteil.

Die beiden ineinandersteckbaren Teile sind im Dichtungsbereich und im Arretierbereich relativ ähnlich mit dem Stand der Technik, nämlich mit den so genannten VDA-Kupplungen, die insbesondere im Automobilbereich verbreitete Anwendungen gefunden und sich dort bestens bewährt haben. (VDA - Verband der deutschen Automobilindustrie) Dort befindet sich typischerweise ein konischer Bereich, der das schnelle Ineinanderstecken der beiden Kupplungsteile gestattet. Die Arretierung der Teile wird mittels eines in einer Nut einrastenden Sicherungsbügels ausgeführt, die beispielsweise bei so genannten "Schnellkupplungen" eingesetzt werden. Die Nut ist in der Wand des einen rohrförmigen Teils ausgebildet. In der Wand des anderen rohrförmigen Teils befinden sich zwei Schlitze. Wenn die Schlitze mit der Nut in einer Ebene übereinstimmen rastet der in den Schlitzen lagernde Sicherungsbügel in der Nut ein.

Die Erfindung wird im Folgenden anhand eines Ausführungsbeispiels beschrieben. Die Beschreibung kann weitere unter Umständen auch wesentliche Merkmale und deren Vorteile enthalten.

Die beiliegenden Abbildungen zeigen Folgendes:
Fig. 1 Perspektivansicht eines Wärmetauschers;
Fig. 2 eine andere Perspektivansicht desselben Wärmetauschers;
Fig. 3 Teilansicht eines Wärmetauschers mit Kupplungsanschluss;
Fig. 4 Schnitt durch den Wärmetauscher und den Kupplungsanschluss;
Fig. 5 Ansicht eines anderen Wärmetauschers mit einem Kupplungsanschluss;
Fig. 6 Schnitt durch den Wärmetauscher und dem Kupplungsanschluss;

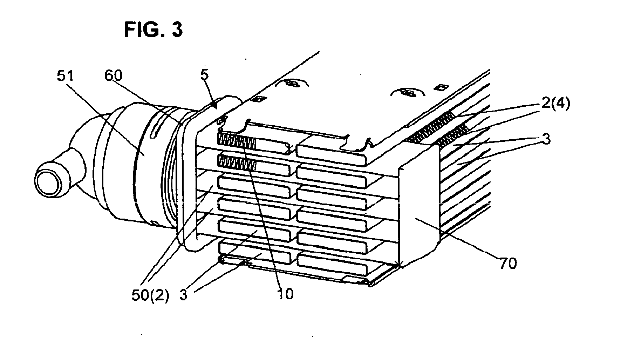

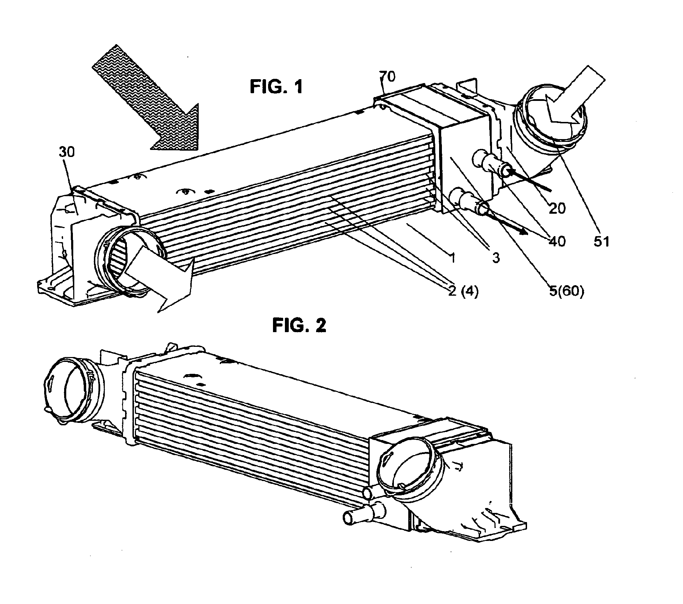

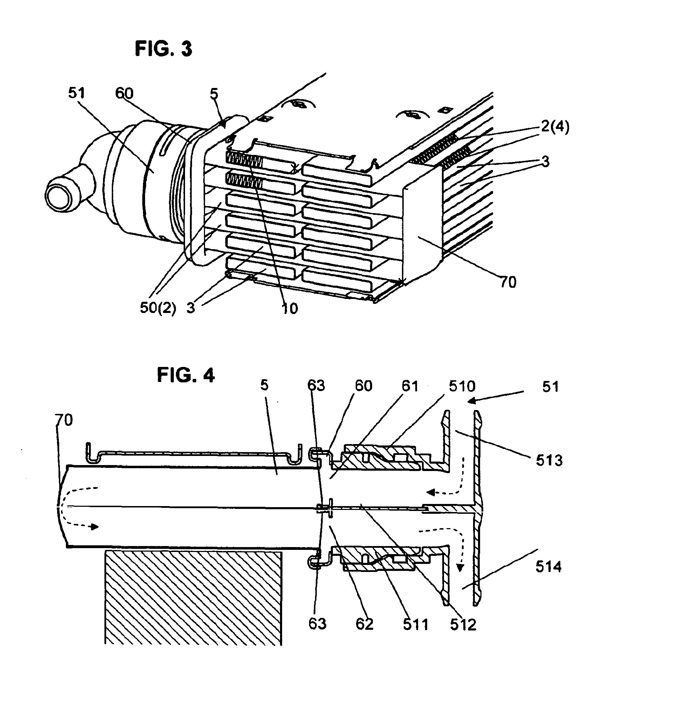

Bei dem in den Figuren dargestellten Wärmetauscher handelt es sich um einen luftgekühlten Ladeluftkühler mit einem integrierten Ladeluft-Vorkühler **5.** Gemäß den Fig. 1 und 2 weist der Wärmetauscher ein Kühlnetz **1,** bestehend aus in Abständen **2** angeordneten Flachrohren **3** und mit Wellrippen **4** in den Abständen **2,** wobei die Ladeluft in den Flachrohren **3** mittels durch die Wellrippen **4** strömender Kühlluft gekühlt wird. In der Fig. 1 zeigt der mit einer Struktur ausgefüllte Blockpfeil die Kühlluft an. Die weißen, nicht ausgefüllten Blockpfeile zeigen die ein- bzw. ausströmende Ladeluft an und die Strichpfeile zeigen das ein - bzw. ausströmende flüssige Kühlmittel des Vorkühlers **5** an. Der Wärmetauscher besitzt darüber hinaus, wie oben erwähnt, einen integrierten Vorkühler **5,** in dem die Ladeluft, mittels der Kühlflüssigkeit des Kraftfahrzeugmotors gekühlt wird. Außerdem hat der Wärmetauscher zwei Kupplungsanschlüsse **51,** die im Ausführungsbeispiel gemäß den Fig. 1, 2 zum Anschluss einer Zuführleitung für die zu kühlende Ladeluft und einer Abführleitung für die gekühlte Ladeluft vorgesehen wurden. Die in diesem Ausführungsbeispiel vorgesehenen Kupplungsanschlüsse **51** sind keine besonderen Kupplungsanschlüsse **51** sondern solche aus dem Stand der Technik. Am Vorkühler **5** befinden sich in diesem Ausführungsbeispiel lediglich Anschlussstutzen **40** zum Anschluss von Kühlmittelschläuchen. Die Anschlussstutzen **40** sind am Sammelkasten **60** des Vorkühlers **5** angeordnet. Am anderen Ende des Vorkühlers **5** befindet sich ein Umlenkkasten **70.** Der Vorkühler **5** ist in einem Abschnitt des Kühlnetzes **1** integriert worden, und zwar unmittelbar am Beginn des Kühlnetzes **1,** also in unmittelbarer Nähe des Sammelkastens **20** für die eintretende Ladeluft. Wäre der Kühler **5** an der gegenüberliegenden Seite des Wärmetauschers, also in der Nähe des Sammelkastens **30,** angeordnet, könnte von einem Nachkühler **5** gesprochen werden. Die Integration wurde so vollzogen, dass die Kühlmittelrohre **50** des Vorkühlers **5** in den erwähnten Abständen **2** zwischen den Flachrohren **3** des Ladeluftkühlers, bzw. des Wärmetauschers angeordnet sind. Sie laufen quer zur Längsrichtung der Flachrohre **3.** In den Flachrohren **3** befinden sich Inneneinsätze **10,** die in der Fig. 3 in lediglich zwei Flachrohren **3** angedeutet wurden. Die Flachrohre **3** könnten anstelle der Inneneinsätze 10 auch andere Turbulenzen erzeugende Ausgestaltungen besitzen. Der Vorkühler 5 erstreckt sich, wie zu sehen ist, über die gesamte Tiefe des Kühlnetzes 1 aber nur über einen geringen Teil der Höhe bzw. der Länge des Kühlnetzes 1.

In dem Ausführungsbeispiel, das in den Fig. 3 und 4 gezeigt ist, besitzt der Vorkühler 5 ebenfalls einen Sammelkasten 60 und einen Umlenkkasten 70. Im Unterschied zum vorne beschriebenen Ausführungsbeispiel wurde am Sammelkasten 60 ein einziger Kupplungsanschluss 51 für die Kühlflüssigkeit angeschlossen, in dem deren Einlass 513 und deren Auslass 514 integriert sind.

Der Kupplungsanschluss 51 besteht aus wenigstens zwei rohrförmigen Teilen 510, **511,** die ineinandersteckbar, arretierbar und abdichtbar sind, wobei in einem der Teile **510** oder **511** eine Trennwand **512** angebracht wurde. Wie die Fig. 4 erkennen lässt, ist das erste Kupplungsteil **511** über zwei Öffnungen **61, 62** in der Wand des Sammelkastens **60** befestigt worden. Die eine Öffnung **61** ist eine Einströmöffnung und die andere Öffnung **62** dementsprechend eine Ausströmöffnung. In der Fig. 4 wurde das durch entsprechende Pfeile kenntlich gemacht, die die Durchströmung anzeigen sollen. Das zweite Kupplungsteil **510** ist koaxial über das erste Kupplungsteil **511** gesteckt worden. Bei einer nicht gezeigten Ausführung wurde das erste Teil **511** koaxial über das zweite Teil **510** gesteckt. Die Teile **510, 511** sind miteinander zu verriegeln und abdichtbar, wie es bei solchen Kupplungsteilen wohl an sich bekannt ist, weshalb hier keine weiteren Erläuterungen erforderlich sind. Die Trennwand **512** ist im gezeigten Ausführungsbeispiel im ersten Kupplungsteil **511** befestigt worden. Dabei umfasst der Begriff "befestigt" alle denkbaren Ausgestaltungen, beispielsweise als Einzelteil eingesetzt und befestigt oder auch integral mit einem der Kupplungsteile **510** oder **511** ausgebildet, oder integral mit der Unterteilwand **63** ausgebildet usw. Die Trennwand **512** im gezeigten Ausführungsbeispiel wirkt an einer Seite mit dem zweiten Kupplungsteil **510** zusammen und an der anderen Seite mit der Wand des Sammelkastens **60,** um eine ausreichende Trennung der Einströmseite von der Ausströmseite sicherzustellen. Der Trennung der erwähnten Seiten voneinander dient auch die bereits angesprochene Unterteilwand **63,** die sich über die Länge des Sammelkastens **60** in demselben erstreckt.

Mit Blick auf die erwähnte Fig. 4, die einen horizontalen Schnitt durch den Wärmetauscher im Bereich des Vorkühlers 5 zeigt, ist leicht nachvollziehbar, dass eine Reihe von Modifikationen des Kupplungsanschlusses **51** vorstellbar sind, ohne den Sinngehalt des Anspruchs zu verlassen. Beispielsweise könnte eine einzige Öffnung in der Wand des Sammelkastens **60** angeordnet sein, wobei dann die Unterteilwand **63** einen Vorsprung besitzt, der sich durch die einzige Öffnung nach außen erstreckt und der als Trennwand **512** in den Kupplungsteilen wirkt. (nicht gezeigt) Offen kann gleichfalls die Materialfrage bleiben, denn die entscheidet der Fachmann ohne Mühe anhand der Gegebenheiten des speziellen Anwendungsfalls. So könnte beispielsweise das Teil **510** aus Metall bestehen und an der Wand des metallischen Sammelkastens **60** angelötet oder angeschweißt werden. Das zweite Teil **512** könnte ebenfalls aus Metall oder auch aus Kunststoff bestehen. Aber auch das erste Teil **510** könnte aus Kunststoff bestehen, und es könnte auch integral mit der Wand des Sammelkastens 60 ausgebildet sein.

Der in den Fig. 3 und 4 gezeigte und beschriebene Kupplungsanschluss **51** könnte leicht die beiden Anschlussstutzen **40** aus den Fig. 1 oder 2 ersetzen. Ferner liegt es auf der Hand, dass das Vorsehen solcher Kupplungsanschlüsse **51** für alle Wärmetauscheranwendungen mit Vorteilen vorgesehen werden kann. Sie sind schon gar nicht auf den Einsatz bei Vorkühlern **5** beschränkt, auch wenn die Figuren 1 - 4 die Kupplungsanschlüsse **51** nur in Verbindung mit Vorkühlern **5** zeigen, wodurch jedoch keine Beschränkung darauf beabsichtigt ist.

Der vorgeschlagene Kupplungsanschluss **51** trägt zur kompakten Ausbildung von Wärmetauschern bei und kann zur Kostensenkung führen.

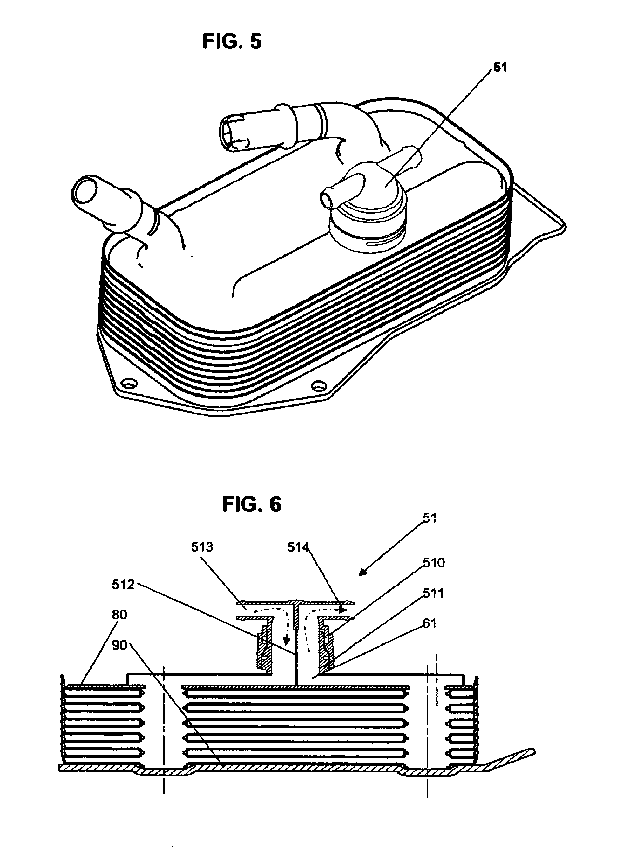

Dieses kann auch anhand der Fig. 5 und 6 nachvollzogen werden. Die beiden Figuren zeigen einen Plattenwärmetauscher an sich bekannter Art, der beispielsweise ein Ölkühler sein kann. Auf dessen Deckplatte **80** ist ein Kupplungsanschluss **51** angeordnet. Auch dieser Kupplungsanschluss **51** hat zwei Kupplungsteile **510** und **511,** die koaxial ineinander greifen. Eine Trennwand **512** sorgt für die Trennung zwischen dem einströmenden Medium am Eintritt **513** und dem ausströmenden Medium am Austritt **514.** Der Eintritt **513** und der Austritt **514** wurden auch in diesem Ausführungsbeispiel am äußeren Kupplungsteil **510** ausgebildet. Das innere Kupplungsteil **511** ist um eine Öffnung **61** herum angeordnet, die mittels der Trennwand **512** unterteilt ist. Wie die Fig. 5 zeigt, besitzt der Plattenwärmetauscher zwei weitere Anschlussstutzen oder dergleichen, die für ein anderes Medium gedacht sind.

## Patentansprüche

1. Wärmetauscher mit Kupplungsanschluss, beispielsweise Ladeluftkühler, mit einem Kühlnetz (1), bestehend aus in Abständen (2) angeordneten Flachrohren (3) und mit Wellrippen (4) in den Abständen (2), sowie mit Sammelkästen (20, 30), wobei beispielsweise die Ladeluft in den Flachrohren (3) mittels durch die Wellrippen (4) strömender Kühlluft gekühlt wird und wobei der Wärmetauscher einen integrierten Vorkühler, Nachkühler (5) aufweist, in dem beispielsweise die Ladeluft, mittels einer Kühlflüssigkeit gekühlt wird,
**dadurch gekennzeichnet, dass** der Vorkühler / Nachkühler (5) in einem Abschnitt des Kühlnetzes (1) integriert ist, wobei die Flachrohre (3) durch den Vorkühler / Nachkühler hindurch laufen und wobei der Vorkühler/Nachkühler (5) flache Kühlflüssigkeitsrohre (50) aufweist, die sich in den Abständen (2) befinden.

2. Wärmetauscher nach Anspruch 1, **dadurch gekennzeichnet, dass** die Kühlflüssigkeitsrohre (50) quer zu den Flachrohren (3) angeordnet sind.

3. Wärmetauscher nach einem der vorstehenden Ansprüche, **dadurch gekennzeichnet, dass** sich der Vorkühler / Nachkühler (5) vorzugsweise über die gesamte Tiefe des Kühlnetzes (1) aber nur über einen geringen Teil der Höhe bzw. der Länge des Kühlnetzes (1) erstreckt_{.}

4. Wärmetauscher nach Anspruch 1 oder 3, **dadurch gekennzeichnet, dass** der Teil bzw. der Abschnitt etwa 5 - 40 % des Kühlnetzes (1) belegt.

5. Wärmetauscher nach einem der vorstehenden Ansprüche, **dadurch gekennzeichnet, dass** der Vorkühler / Nachkühler (5) wenigstens einen Sammelkasten (60) und einen Kupplungsanschluss (51), beispielsweise für die Kühlflüssigkeit, aufweist, in dem deren Einlass und deren Auslass integriert sind.

6. Wärmetauscher nach einem der vorstehenden Ansprüche, **dadurch gekennzeichnet, dass** der Kupplungsanschluss (51) aus wenigstens zwei rohrförmigen Teilen (510, 511) besteht, die ineinandersteckbar, arretierbar und abdichtbar sind, wobei in einem der Teile (510 oder 511) eine Trennwand (512) angeordnet ist und wobei in dem einen oder in dem anderen der Teile (510 oder 511) wenigstens ein Einlassanschluss (513) und wenigstens ein Auslassanschluss (514) angeordnet ist, und wobei das eine Teil über wenigstens einer Öffnung (61, 62) in der Wand des Sammelkastens (60) angeordnet ist.

7. Wärmetauscher nach einem der vorstehenden Ansprüche, **dadurch gekennzeichnet, dass** der Sammelkasten (60) eine Unterteilwand (63) besitzt, die denselben in einen Einlassteil (64) und in einen Auslassteil (65) aufteilt, wobei die eine Öffnung (61) mit dem Einlassteil und die andere Öffnung (62) mit dem Auslassteil kommuniziert.

8. Wärmetauscher nach einem der vorstehenden Ansprüche, **dadurch gekennzeichnet, dass** das eine Teil aus Metall besteht und an der Wand des Sammelkastens (60) angelötet ist, und dass das andere Teil aus Kunststoff ausgebildet sein kann.

9. Kupplungsanschluss (51) für Wärmetauscher nach einem der vorstehenden Ansprüche, bestehend aus wenigstens zwei rohrförmigen Teilen (510, 511), die ineinandersteckbar, arretierbar und abdichtbar sind, **dadurch gekennzeichnet, dass** sich in einem der Teile (510 oder 511) eine Trennwand (512) erstreckt und dass an dem einen oder an dem anderen der Teile (510 oder 511) wenigstens ein Einlassanschluss (513) und/oder wenigstens ein Auslassanschluss (514) angeordnet ist.

10. Kupplungsanschluss nach Anspruch 9, **dadurch gekennzeichnet, dass** eines der rohrförmigen Teile (510, 511) an wenigstens zwei beieinander liegenden Öffnungen (61, 62) in einer Wand eines Sammelkastens (60) befestigt ist, wobei der Sammelkasten (60) wenigstens eine Unterteilwand (63) aufweist, die den Sammelkasten (60) in einen Einlassteil (64) und in einen Auslassteil (65) aufteilt.

11. Kupplungsanschluss nach Anspruch 9, **dadurch gekennzeichnet, dass** die Trennwand (512) ein vorspringendes Teil der Unterteilwand (63) ist, wobei sich das Teil aus einer Öffnung in der Wand des Sammelkastens (60) in eines der rohrförmigen Teile (510, 511) hinein erstreckt.

12. Kupplungsanschluss nach einem der Ansprüche 9 -11, **dadurch gekennzeichnet, dass** das am Sammelkasten (60) befestigte Teil (510) aus Metall, beispielsweise aus Aluminium besteht und an der Wand des Sammelkastens (60) angelötet ist, wobei das andere Teil (511) aus Kunststoff ausgebildet sein kann.

13. Kupplungsanschluss für Wärmetauscher nach einem der Ansprüche 9 - 12, **dadurch gekennzeichnet, dass** der Kupplungsanschluss (51) für beliebige Wärmetauscher mit oder ohne Vorkühler/Nachkühler (5) anwendbar ist.

14. Kupplungsanschluss für Wärmetauscher nach einem der vorstehenden Ansprüche, **dadurch gekennzeichnet, dass** der Wärmetauscher ein Plattenwärmetauscher ist, auf dessen Deck - oder Grundplatte der Kupplungsanschluss (51) angeordnet ist.

## Claims

1. Heat exchanger with coupling connector, for example charge-air cooler, having a cooling network (1) composed of flat tubes (3) arranged with spacings (2) and having corrugated fins (4) in the spacings (2), and also having collecting tanks (20, 30), wherein for example the charge air is cooled in the flat tubes (3) by means of cooling air flowing through the corrugated fins (4), and wherein the heat exchanger has an integrated pre-cooler/post-cooler (5) in which for example the charge air is cooled by means of a cooling liquid,
**characterized in that** the pre-cooler/post-cooler (5) is integrated in a portion of the cooling network (1), wherein the flat tubes (3) run through the precooler/post-cooler, and wherein the pre-cooler/post-cooler (5) has flat cooling-liquid tubes (50) which are situated in the spacings (2).

2. Heat exchanger according to Claim 1, **characterized in that** the cooling-liquid tubes (50) are arranged transversely with respect to the flat tubes (3).

3. Heat exchanger according to one of the preceding claims, **characterized in that** the pre-cooler/post-cooler (5) extends preferably over the entire depth of the cooling network (1) but only over a small part of the height or of the length of the cooling network (1).

4. Heat exchanger according to Claim 1 or 3, **characterized in that** the part or the portion amounts to approximately 5 - 40% of the cooling network (1).

5. Heat exchanger according to one of the preceding claims, **characterized in that** the pre-cooler/post-cooler (5) has at least one collecting tank (60) and one coupling connector (51), for example for the cooling liquid, in which the inlet and the outlet of said collecting tank are integrated.

6. Heat exchanger according to one of the preceding claims, **characterized in that** the coupling connector (51) is composed of at least two tubular parts (510, 511) which can be plugged one into the other, locked and sealed off, wherein a partition (512) is arranged in one of the parts (510 or 511), and wherein at least one inlet connector (513) and at least one outlet connector (514) is arranged in one or in the other of the parts (510 or 511), and wherein one part is arranged in the wall of the collecting tank (60) via at least one opening (61, 62).

7. Heat exchanger according to one of the preceding claims, **characterized in that** the collecting tank (60) has a dividing wall (63) which divides the former into an inlet part (64) and an outlet part (65), wherein one opening (61) communicates with the inlet part and the other opening (62) communicates with the outlet part.

8. Heat exchanger according to one of the preceding claims, **characterized in that** one part is composed of metal and is soldered to the wall of the collecting tank (60), and **in that** the other part can be formed from plastic.

9. Coupling connector (51) for heat exchangers according to one of the preceding claims, composed of at least two tubular parts (510, 511) which can be plugged one into the other, locked and sealed off, **characterized in that** a partition (512) extends in one of the parts (510 or 511), and **in that** at least one inlet connector (513) and/or at least one outlet connector (514) is arranged on one or on the other of the parts (510 or 511).

10. Coupling connector according to Claim 9, **characterized in that** one of the tubular parts (510, 511) is fastened to at least two adjacently .situated openings (61, 62) in a wall of a collecting tank (60), wherein the collecting tank (60) has at least one dividing wall (63) which divides the collecting tank (60) into an inlet part (64) and an outlet part (65).

11. Coupling connector according to Claim 9, **characterized in that** the partition (512) is a projecting part of the dividing wall (63), wherein the part extends out of an opening in the wall of the collecting tank (60) into one of the tubular parts (510, 511).

12. Coupling connector according to one of Claims 9 - 11, **characterized in that** the part (510) that is fastened to the collecting tank (60) is composed of metal, for example of aluminium, and is soldered to the wall of the collecting tank (60), wherein the other part (511) can be formed from plastic.

13. Coupling connector for heat exchangers according to one of Claims 9 - 12, **characterized in that** the coupling connector (51) can be used for any desired heat exchangers with or without a pre-cooler/post-cooler (5).

14. Coupling connector for heat exchangers according to one of the preceding claims, **characterized in that** the heat exchanger is a plate-type heat exchanger, on the cover or base plate of which the coupling connector (51) is arranged.

## Revendications

1. Échangeur de chaleur avec un raccord d'accouplement, par exemple refroidisseur d'air de charge, comprenant un réseau de refroidissement (1), constitué de tubes plats (3) disposés à intervalles (2) et comprenant des ailettes ondulées (4) dans les intervalles (2), ainsi que des caisses collectrices (20, 30), l'air de charge étant par exemple refroidi dans les tubes plats (3) au moyen d'air de refroidissement s'écoulant à travers les nervures ondulées (4), et l'échangeur de chaleur présentant un pré-refroidisseur/post-refroidisseur (5) intégré, dans lequel l'air de charge est par exemple refroidi au moyen d'un liquide de refroidissement,
**caractérisé en ce que** le pré-refroidisseur/post-refroidisseur (5) est intégré dans une portion du réseau de refroidissement (1), les tubes plats (3) s'étendant à travers le pré-refroidisseur/post-refroidisseur et le pré-refroidisseur/post-refroidisseur (5) présentant des tubes plats de liquide de refroidissement (50) qui se trouvent dans les intervalles (2).

2. Échangeur de chaleur selon la revendication 1, **caractérisé en ce que** les tubes de liquide de refroidissement (50) sont disposés transversalement aux tubes plats (3).

3. Échangeur de chaleur selon l'une quelconque des revendications précédentes, **caractérisé en ce que** le pré-refroidisseur/post-refroidisseur (5) s'étend de préférence sur toute la profondeur du réseau de refroidissement (1) mais seulement sur une faible partie de la hauteur ou de la longueur du réseau de refroidissement (1).

4. Échangeur de chaleur selon la revendication 1 ou 3, **caractérisé en ce que** la partie ou la portion occupe approximativement 5 - 40 % du réseau de refroidissement (1).

5. Échangeur de chaleur selon l'une quelconque des revendications précédentes, **caractérisé en ce que** le pré-refroidisseur/post-refroidisseur (5) présente au moins une caisse collectrice (60) et un raccord d'accouplement (51), par exemple pour le liquide de refroidissement, dans lequel sont intégrés son entrée et sa sortie.

6. Échangeur de chaleur selon l'une quelconque des revendications précédentes, **caractérisé en ce que** le raccord d'accouplement (51) se compose d'au moins deux parties tubulaires (510, 511), qui peuvent être emboîtées l'une dans l'autre, bloquées et étanchéifiées, une paroi de séparation (512) étant disposée dans l'une des parties (510 ou 511) et au moins un raccord d'entrée (513) et au moins un raccord de sortie (514) étant disposés dans l'une ou l'autre des parties (510 ou 511), et l'une des parties étant disposée sur au moins une ouverture (61, 62) dans la paroi de la caisse collectrice (60).

7. Échangeur de chaleur selon l'une quelconque des revendications précédentes, **caractérisé en ce que** la caisse collectrice (60) possède une paroi de division (63) qui la divise en une partie d'entrée (64) et une partie de sortie (65), l'une des ouvertures (61) communiquant avec la partie d'entrée et l'autre ouverture (62) communiquant avec la partie de sortie.

8. Échangeur de chaleur selon l'une quelconque des revendications précédentes, **caractérisé en ce que** l'une des parties est constituée de métal et est brasée à, la paroi de la caisse collectrice (60), et **en ce que** l'autre partie peut être réalisée en plastique.

9. Raccord d'accouplement (51) pour un échangeur de chaleur selon l'une quelconque des revendications précédentes, constitué d'au moins deux parties tubulaires (510, 511) qui peuvent être emboîtées l'une dans l'autre, bloquées et étanchéifiées, **caractérisé en ce qu'**une paroi de séparation (512) s'étend dans l'une des parties (510 ou 511) et **en ce qu'**au moins un raccord d'entrée (513) et/ou au moins un raccord de sortie (514) sont disposés sur l'une ou l'autre des parties (510 ou 511).

10. Raccord d'accouplement selon la revendication 9, **caractérisé en ce que** l'une des parties tubulaires (510, 511) est fixée au niveau d'au moins deux ouvertures adjacentes (61, 62) dans une paroi d'une caisse collectrice (60), la caisse collectrice (60) présentant au moins une paroi de division (63), qui divise la caisse collectrice (60) en une partie d'entrée (64) et en une partie de sortie (65).

11. Raccord d'accouplement selon la revendication 9, **caractérisé en ce que** la paroi de séparation (512) est une partie saillante de la paroi de division (63), cette partie s'étendant depuis une ouverture dans la partie de la caisse collectrice (60) dans l'une des parties tubulaires (510, 511).

12. Raccord d'accouplement selon l'une quelconque des revendications 9 à 11, **caractérisé en ce que** la partie (510) fixée à la caisse collectrice (60) se compose de métal, par exemple d'aluminium, et est brasée à la paroi de la caisse collectrice (60), l'autre partie (511) pouvant être réalisée en plastique.

13. Raccord d'accouplement pour un échangeur de chaleur selon l'une quelconque des revendications 9 à 12, **caractérisé en ce que** le raccord d'accouplement (51) peut être utilisé pour des échangeurs de chaleur quelconques avec ou sans pré-refroidisseur/post-refroidisseur (5).

14. Raccord d'accouplement pour un échangeur de chaleur selon l'une quelconque des revendications précédentes, **caractérisé en ce que** l'échangeur de chaleur est un échangeur de chaleur à plaque sur la plaque de recouvrement ou plaque de base duquel est disposé le raccord d'accouplement (51).
